# EUROPÄISCHE PATENTSCHRIFT

(11) **EP 1 224 048 B1**
(45) Veröffentlichungstag und Bekanntmachung des Hinweises auf die Patenterteilung: **03.09.2003**
(21) Anmeldenummer: 00962508.8
(22) Anmeldetag: 20.09.2000
(51) Int. Cl.: B23B 29/034

(54) **WERKZEUGHALTER**
TOOL HOLDER
PORTE-OUTIL

(30) Priorität: 27.10.1999 DE 19951658
(43) Veröffentlichungstag der Anmeldung: 24.07.2002
(73) Patentinhaber: WOHLHAUPTER GMBH, D-72636 Frickenhausen (DE)
(72) Erfinder: MAAR, Peter, 72636 Frickenhausen (DE)
(74) Vertreter: Karrais, Martin
(86) Internationale Anmeldenummer: EP0009178
(87) Internationale Veröffentlichungsnummer: WO01030523

(56) Entgegenhaltungen:
- US-A- 2 358 516
- US-A- 4 275 624
- US-A- 4 451 185

## Beschreibung

Die Erfindung betrifft einen Werkzeughalter für den Einsatz in Werkzeugmaschinen umfassend einen um eine Drehachse rotierenden Grundkörper und mindestens zwei mittels einer axial verschiebbaren Steuerstange und Kopplungsmittel radial zwischen einer eingefahrenen und einer ausgefahrenen Stellung verstellbare, jeweils eine Schneidplatte haltende Schneidenhalter.

Derartige Werkzeughalter kommen für Drehbearbeitungen, insbesondere zur Erzeugung einer Innennut, nachfolgend Einstich genannt, zum Einsatz. Hierbei sind Werkzeughalter bekannt mit einer axial verschiebbaren Steuerstange, die mittels eines maschinenseitigen hydraulischen oder elektrischen Servoantriebes zu einer Axialbewegung antreibbar ist. Die Axialbewegung wird mittels geeigneter Kopplungsmittel, beispielsweise über ein durch die Steuerstange betätigbares Keilgetriebe, in eine Radialbewegung eines einzigen Schneidenhalters umgewandelt, an dem eine Schneidplatte angeordnet ist, die mit dem zu bearbeitenden Werkstück in Eingriff gelangt. Ein derartiger Werkzeughalter ist beispielsweise aus der DE 40 22 579 A1 bekannt. Es erfolgt hierbei eine einschneidige Bearbeitung.

Alternativ hierzu sind bereits Werkzeughalter bekannt, bei denen zur Erzeugung eines Einstiches mehrere Schneiden umfangsseitig an einer rotierenden Halterung angeordnet sind, die ihrerseits auf einer Kreisbahn umläuft. Bei derartigen Zirkularfräsbearbeitungen kommen nacheinander einzelne Schneiden mit dem zu bearbeitenden Werkstück in Eingriff.

Aus der US-A-4 275 624 ist ein Werkzeughalter bekannt, bei dem gleichzeitig zwei in axialem Abstand zueinander angeordnete Schneidenhalter vorgesehen sind, die mittels einer exzentrisch gelagerten, axial verschiebbaren Steuerstange mit einer Schrägverzahnung in axialer Richtung verstellbar sind. An den Schneidenhaltern läßt sich jeweils ein Schneidwerkzeug befestigen, so daß gleichzeitig zwei axial zueinander beabstandete Einstiche in ein Werkstück eingebracht werden können. Für jeden Einstich kommt jeweils nur ein Schneidwerkzeug mit dem Werkstück in Eingriff. Um die Schneidwerkzeuge in radialer Richtung zu bewegen, ist es erforderlich, eine separate Zugstange in axialer Richtung zu verschieben. Hierzu ist ein Handrad vorgesehen, das mit der Zugstange gekoppelt ist.

In der US-A-2 358 516 wird ein Werkzeughalter beschrieben, bei dem mehrere entlang eines gemeinsamen Umfangs angeordnete Schneiden gleichzeitig mit einem Werkstück in Eingriff gebracht werden können. Die Schneiden sind über Kopplungsmittel mit einem Antriebskopf gekoppelt, der in Rotation versetzt werden kann. Zum radialen Ein-und Ausfahren der Schneiden muß der Antriebskopf von der zugeordneten Werkzeugmaschine zusätzlich mit einer axialen Druckkraft beaufschlagt werden.

Sowohl Werkzeughalter mit einschneidiger Bearbeitung als auch Werkzeughalter mit mehreren Schneiden und zirkularer Bearbeitung weisen den Nachteil auf, daß die damit erzeugte Oberflächenbeschaffenheit in der Innennut und auch deren geometrische Rundheit in vielen Fällen unbefriedigend ist, so daß eine Nachbearbeitung erforderlich sein kann. Außerdem ist eine beachtliche Herstellzeit für den Einstich erforderlich.

Aufgabe der vorliegenden Erfindung ist es, einen Werkzeughalter der eingangs genannten Art derart auszubilden, daß innerhalb kürzerer Zeit ein hohen Anforderungen an die Beschaffenheit der Oberfläche und die geometrische Rundheit genügender Einstich hergestellt werden kann, wobei zur Erzielung des Einstiches antriebsseitig lediglich ein Drehantrieb bereitgestellt werden muß.

Diese Aufgabe wird bei einem Werkzeughalter der gattungsgemäßen Art erfindungsgemäß dadurch gelöst, daß die mindestens zwei radial zwischen einer eingefahrenen und einer ausgefahrenen Stellung verstellbaren Schneidenhalter über einen gemeinsamen Kreisumfang verteilt angeordnet sind und deren Schneiden zur Erzeugung eines Einstiches gleichzeitig mit einem Werkstück in Eingriff bringbar sind, und daß der Werkzeughalter Getriebemittel umfaßt zur Umwandlung einer Rotationsbewegung des Grundkörpers in eine axial ausgerichtete Hin- und Herbewegung der Steuerstange, wobei die Getriebemittel zwei relativ zueinander verdrehbare, über eine schräg zur Axialrichtung ausgerichtete Steuerkurve aneinander anliegende Kurvenelemente umfassen.

Durch den Einsatz mehrerer Schneidenhalter, deren Schneiden bei der Bearbeitung gleichzeitig mit dem Werkstück in Eingriff sind, erfolgt eine gegenseitige Abstützung der Schneiden. Dies hat eine höhere Präzision und damit eine besonders hohe Oberflächengüte des erzeugten Einstiches zur Folge. Außerdem lassen sich dadurch auch höchste Anforderungen an die geometrische Rundheit des Einstiches erfüllen. Der gleichzeitige Einsatz mehrerer Schneiden hat darüber hinaus eine beträchtliche Verringerung der Herstellzeit für den Einstich zur Folge. Damit sind ganz erhebliche Kostenvorteile für den Anwender verbunden, was letztlich zu Einsparungen an Fertigungseinheiten führt und ein beachtliches Rationalisierungspotential darstellt.

Die Radialbewegung der Schneidenhalter wird von der Steuerstange hervorgerufen, deren Bewegung über geeignete Kopplungsmittel auf die Schneidenhalter übertragen wird. Erfindungsgemäß umfaßt der Werkzeughalter Getriebemittel zur Umwandlung einer Rotationsbewegung des Grundkörpers in eine axial ausgerichtete Hin- und Herbewegung der Steuerstange. Der Grundkörper hat folglich eine doppelte Funktion. Zum einen wird durch die Rotationsbewegung eine entsprechende Drehbewegung der Schneiden sichergestellt, zum anderen dient die Rotationsbewegung des Grundkörpers als Antrieb für die Steuerstange, die ihrerseits die Radialbewegung der Schneidenhalter hervorruft. Dies hat den Vorteil, daß maschinenseitig lediglich eine Antriebsspindel bereitgestellt werden muß, mit der der Grundkörper zur Erzielung einer Rotationsbewegung gekoppelt werden kann, ein maschinenseitiger hydraulischer oder elektrischer Servoantrieb kann somit entfallen. Der Werkzeughalter kann also einen rein mechanischen Antriebsstrang aufweisen und kann deshalb besonders robust ausgestaltet werden.

Gemäß der Erfindung ist vorgesehen, daß die Getriebemittel zwei relativ zueinander verdrehbare, über eine schräg zur Axialrichtung ausgerichtete Steuerkurve aneinander anliegende Kurvenelemente umfassen. Die Kurvenelemente können beispielsweise ringförmig ausgestaltet und den Grundkörper in Umfangsrichtung umgebend ausgebildet sein, wobei sichergestellt ist, daß sie relativ zueinander eine unterschiedliche Umdrehungsgeschwindigkeit aufweisen. Zumindest ein Kurvenelement bildet eine Steuerkurve aus, an der das andere Kurvenelement anliegt, und aufgrund der schrägen Ausrichtung der Steuerkurve wird durch die relative Verdrehung der aneinander anliegenden Kurvenelemente eine Axialbewegung hervorgerufen.

Vorzugsweise umfaßt der Werkzeughalter drei über einen Kreisumfang verteilt angeordnete Schneidenhalter mit zugeordneter Schneide. Der Einsatz von drei Schneiden bewirkt eine besonders zuverlässige gegenseitige Abstützung, außerdem kann hierdurch der radiale Vorschub im Vergleich zur Bearbeitung des Werkstückes mit nur einer Schneide um den Faktor 3 erhöht werden, wodurch wiederum die Herstellzeit für den Einstich entsprechend verringert werden kann. Hierbei kann vorgesehen sein, daß die Schneidenhalter gleichmäßig über den Umfang verteilt angeordnet sind. Besonders günstig ist eine ungleichmäßige Verteilung, da die dadurch erzielbare ungleichmäßige Krafteinleitung eine starke Dämpfung von Schwingungen zur Folge hat.

Um den Arbeitshub der Schneidenhalter zwischen ihrer eingefahrenen und ihrer ausgefahrenen Stellung an die jeweiligen Einsatzbedingungen auf einfache Weise anpassen zu können, ist es von Vorteil, wenn der Axialhub der Steuerstange einstellbar ist.

Günstig ist es, wenn ein erstes Kurvenelement über ein Zahnradgetriebe mit dem Grundkörper gekoppelt ist. Dadurch wird die Rotationsbewegung des Grundkörpers über das Zahnradgetriebe auf das erste Kurvenelement übertragen.

Das Zahnradgetriebe kann beispielsweise nach Art eines Planetengetriebes ausgestaltet sein und zwei auf einer gemeinsamen Drehachse angeordnete und starr miteinander verbundene Planetenräder aufweisen, die jeweils mit einem Zahnkranz kämmen, wobei die Zahnkränze vorzugsweise koaxial zur Drehachse des Grundkörpers ausgerichtet sind und diesen jeweils umgeben. Hierbei kann vorgesehen sein, daß ein erster Zahnkranz unverdrehbar am Grundkörper gehalten ist und somit mit diesem eine gemeinsame Rotationsbewegung ausführt, während der zweite

### (weiter auf Seite 6 der ursprünglich eingereichten Anmeldeunterlagen)

Zahnkranz eine relativ zum Grundkörper unterschiedliche Umdrehungszahl aufweist. Das erste Kurvenelement ist vorzugsweise unmittelbar am zweiten Zahnkranz drehfest gehalten. Durch Wahl der jeweils gewünschten Übersetzungen zwischen den Zahnkränzen und den Planetenrädern einerseits und zwischen den beiden Planetenrädern andererseits kann somit die Umdrehungszahl des zweiten Zahnkranzes und des ersten Kurvenelementes eingestellt werden.

Eine Rotationsbewegung des zweiten Kurvenelementes kann dadurch erzeugt werden, daß dieses starr mit der Steuerstange verbunden ist, die ihrerseits axial verschiebbar jedoch unverdrehbar am Grundkörper gehalten ist. Aufgrund der unverdrehbaren Halterung weist die Steuerstange dieselbe Umdrehungszahl wie der Grundkörper auf, so daß auch das starr mit der Steuerstange verbundene zweite Kurvenelement die identische Umdrehungszahl aufweist.

Die Hin- und Herbewegung der Steuerstange wird mittels der Steuerkurve hervorgerufen. Hierbei ist von Vorteil, wenn die rückwärtige Bewegung der Steuerstange federunterstützt ist. So kann beispielsweise vorgesehen sein, daß eines der beiden Kurvenelemente, beispielsweise das zweiten Kurvenelement, in Richtung auf das andere Kurvenelement federbelastet ist. Dadurch wird sichergestellt, daß die beiden Kurvenelemente auch bei sehr hohen Umdrehungszahlen zuverlässig aneinander anliegen. Die Federbelastung kann beispielsweise mittels einer Druckfeder hervorgerufen werden, die an der Steuerstange anliegt und von dieser auf das mit ihr verbundene zweite Kurvenelement übertragen wird.

Die zwischen der Steuerstange und den Schneidplatten angeordneten Kopplungsmittel wurden bisher nicht näher erläutert. Bei einer bevorzugten Ausführungsform des erfindungsgemäßen Werkzeughalters ist hierzu vorgesehen, daß die Schneidenhalter in radial ausgerichteten Führungen verschiebbar gehalten sind und jeweils an einer schräg zur Drehachse ausgerichteten Gleitfläche der Steuerstange anliegen. Dadurch wird auf konstruktiv besonders einfache Weise sichergestellt, daß die Schneidenhalter ausgehend von ihrer eingefahrenen Stellung radial in ihre ausgefahrene Stellung verschoben werden, wenn die Steuerstange axial nach vorne bewegt wird.

Um eine zwangsweise Rückführung der Schneidenhalter aus ihrer ausgefahrenen Stellung ihre eingefahrene Stellung bei einer axial rückwärtigen Bewegung der Steuerstange sicherzustellen, ist vorzugsweise ein elastisches Rückholelement vorgesehen. Eine besonders bevorzugten Ausführungsform zeichnet sich hierbei dadurch aus, daß die Schneidenhalter einen zwischen der eingefahrenen und der ausgefahrenen Stellung verschiebbaren Schlitten umfassen, an dem die Schneide gehalten ist, sowie eine den Schlitten in Richtung auf seine eingefahrene Stellung belastende Rückholfeder.

Um sicherzustellen, daß die Schneidenhalter aufgrund der rotationsbedingten Zentrifugalkräfte keine unkontrollierte, radial nach außen gerichtete Bewegung ausführen, ist bei einer besonders bevorzugten Ausführungsform vorgesehen, daß die Schneidenhalter verschiebbar und formschlüssig verbindbar an der Steuerstange gehalten sind. Durch den Formschluß wird sichergestellt, daß die Schneidenhalter auch bei hohen Umdrehungszahlen zuverlässig an der Steuerstange anliegen. Eine unkontrollierte Bewegung wird verhindert.

Der Formschluß kann beispielsweise als Schwalbenschwanzführung ausgestaltet sein. Bei einer konstruktiv besonders einfachen Ausführungsform der förmschlüssigen Verbindung zwischen Schneidenhalter und Steuerstange ist an einem der zu verbindenden Teile eine Führungsnut vorgesehen, in die ein komplementär ausgestalteter, am anderen Teil festgelegter Zugbolzen eingreift.

Von Vorteil ist es, wenn der Werkzeughalter einen Einstellmechanismus zum Einstellen der Position der Schneidenhalter in ihrer eingefahrenen Stellung umfaßt. Dadurch können die an den Schneidenhaltern gehaltene Schneiden zur Herstellung eines Einstiches auf einfache Weise an den jeweiligen Innendurchmesser der Werkstückbohrung angepaßt werden, die mit dem Einstich ausgestaltet werden soll.

Vorzugsweise ist vorgesehen, daß zum Einstellen oder Feinjustieren der Position der Schneidenhalter die Länge der Steuerstange veränderbar ist. Je länger die Steuerstange, desto mehr ragen die schräg an ihr anliegenden Schneidenhalter radial nach außen. Soll die Lage der Schneidenhalter beispielsweise an einen geringeren Durchmesser der Werkstückbohrung angepaßt werden, so muß hierzu lediglich die Länge der Steuerstange verringert werden.

Hierzu ist es günstig, wenn die Steuerstange separate vordere und hintere Stangenabschnitte aufweist, die über ein Verstellelement in ihrem axialen Abstand verstellbar miteinander verbindbar sind.

Der erfindungsgemäße Werkzeughalter umfaßt mehrere Schneidenhalter mit jeweils einer Schneide, die durch den rotierenden Grundkörper über mechanische Übertragungsmittel zu einer radial ausgerichteten Bewegung antreibbar sind, indem sie ausgehend von ihrer eingefahrenen Stellung eine Radialbewegung in ihre ausgefahrene Stellung und wieder zurück in die eingefahrene Stellung ausführen. Sämtliche Schneiden kommen gleichzeitig mit dem Werkstück in Eingriff und stützen sich dadurch gegenseitig ab. Zur Erzielung eines Einstiches ist es lediglich erforderlich, den Grundkörper zu einer Rotationsbewegung anzutreiben, so daß die Schneidenhalter zum radialen Einstechen nach außen ausfahren und anschliessend wieder ihre eingefahrene Stellung einnehmen.

Bei einer besonders bevorzugten Ausführungsform ist vorgesehen, daß der Werkzeughalter eine Sensoreinheit umfaßt zur Erfassung der eingefahrenen Stellung der Schneidenhalter. Mittels der Sensoreinheit ist ein Stopsignal für den maschinenseitigen Antrieb des Grundkörpers generierbar, so daß maschinenseitig der Antrieb des Grundkörpers abgeschaltet werden kann, wenn die Schneidenhalter wieder ihre eingefahrene Stellung eingenommen haben.

Besonders vorteilhaft ist es, wenn sowohl die eingefahrene als auch die ausgefahrene Stellung der Schneidenhalter mittels der Sensoreinheit erfaßbar sind. Dies ermöglicht eine besonders zuverlässige Überwachung des Einstechvorganges.

Vorzugsweise sind die eingefahrene und vorteilhafterweise auch die ausgefahrene Stellung berührungslos erfaßbar. Dadurch kann eine mechanische Abnutzung der Sensoreinheit vermieden werden.

Bei einer bevorzugten Ausführungsform ist vorgesehen, daß die Sensoreinheit zumindest einen Hallsensor umfaßt, dem mindestens ein korrespondierender Magnet zugeordnet ist. Die eingefahrene Stellung der Schneidenhalter kann beispielsweise dadurch ermittelt werden, daß an den Schneidenhaltern jeweils ein Magnet angeordnet ist, mit dem jeweils ein Hallsensor korrespondiert. Es kann auch vorgesehen sein, daß die der Position der Schneidenhalter entsprechende Position der Steuerstange berührungslos erfaßbar ist, da aufgrund der zum Einsatz kommenden Zwangsführung der Schneidenhalter eine eindeutige Beziehung zwischen der Lage der Steuerstange und der Lage der Schneidenhalter besteht. So können beispielsweise mehrere Magnete an dem starr mit der Steuerstange verbundenen zweiten Kurvenelement angeordnet sein, wobei die Axialbewegung des zweiten Kurvenelementes mit der entsprechenden Axialbewegung der Steuerstange korrespondiert.

Günstig ist es, wenn der Werkzeughalter eine elektrische Spannungsversorgung für die Sensoreinheit , beispielsweise den Hallsensor, umfaßt, da dadurch eine externe elektrische Versorgungsleitung entfallen kann.

Die Auswertung und Aufbereitung des von der Sensoreinheit bereitgestellten Sensorsignales erfolgt in üblicher Weise mittels einer Elektronik. Diese ist vorzugsweise der Sensoreinheit benachbart angeordnet.

Bei einer vorteilhaften Ausführungsform ist vorgesehen, daß die Elektronik in Abhängigkeit von der Rotationsbewegung des Grundkörpers selbsttätig ein- und ausschaltbar ist. Dadurch kann sichergestellt werden, daß die Elektronik nur dann eingeschaltet ist, wenn der Grundkörper rotiert und somit eine Erfassung der Position der Schneidenhalter gewünscht ist. Ansonsten ist die Elektronik ausgeschaltet, so daß deren Energieverbrauch sehr gering gehalten wird.

Zum selbsttätigen Ein- und Ausschalten der Sensorelektronik kann der Werkzeughalter beispielsweise einen Reed-Schalter und einen zugeordneten Magneten umfassen.

Bevorzugt ist der Sensoreinheit eine elektrische Datenübertragungseinheit zugeordnet zur drahtlosen Übertragung der ermittelten Positionsdaten an eine maschinenseitige Steuerung. Die Übertragung kann hierbei beispielsweise mittels Funksignal oder Infrarot-Signal erfolgen.

Von Vorteil ist es, wenn der Werkzeughalter einen mit dem Grundkörper lösbar verbindbaren Werkzeugkopf umfaßt, an dem die Schneidenhalter angeordnet sind, sowie ein den Grundkörper umgebendes ortfestes Gehäuse. Dies ermöglicht es auf besonders einfache und zeitsparende Weise die jeweils gewünschten Schneidenhalter mit festgelegter Schneide auszutauschen, indem der gesamte Werkzeugkopf vom Grundkörper gelöst wird.

Vorzugsweise nimmt das ortsfeste Gehäuse die Sensoreinheit mit zugeordneter Elektronik und Spannungsversorgung auf, und auch der Reed-Schalter kann am Gehäuse gehalten sein.

Die nachfolgende Beschreibung einer bevorzugten Ausführungsform der Erfindung dient im Zusammenhang mit der Zeichnung der näheren Erläuterung. Es zeigen:

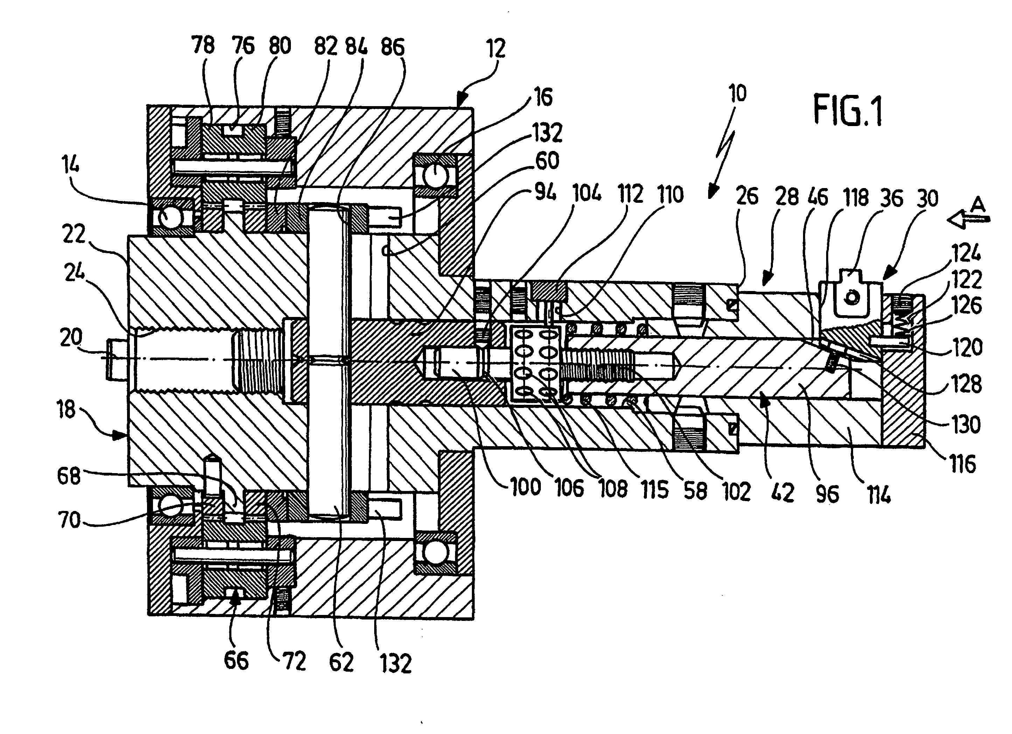

- Figur 1:: einen schematischen Längsschnitt durch einen Werkzeughalter;
- Figur 2:: eine teilweise aufgetrennte Seitenansicht eines Grundkörpers des Werkzeughalters mit abgenommenem Gehäuse;

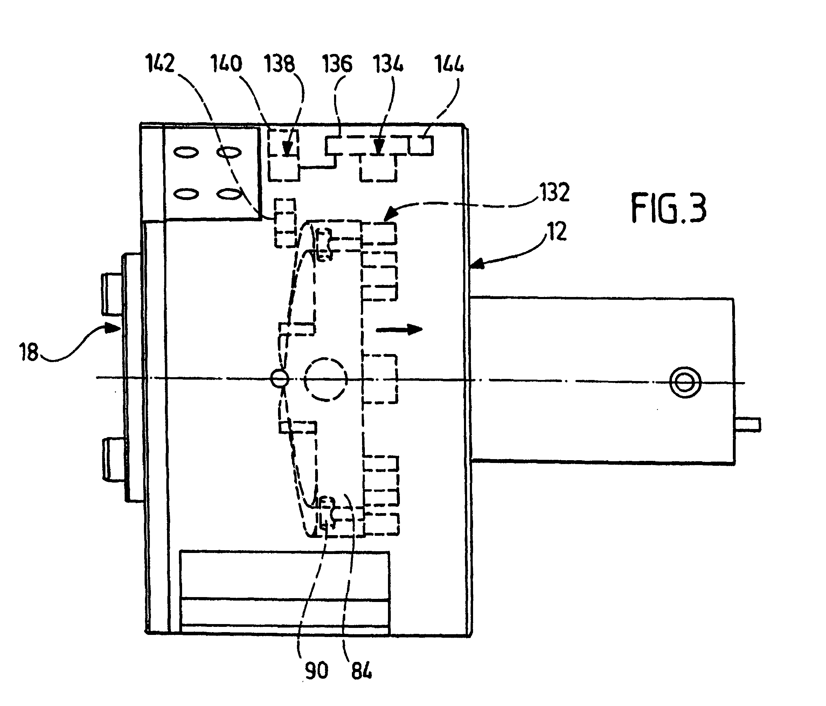

- Figur 3:: eine Seitenansicht des Grundkörpers mit Gehäuse;
- Figur 4:: eine perspektivische Teildarstellung eines Werkzeugkopfes des Werkzeughalters und

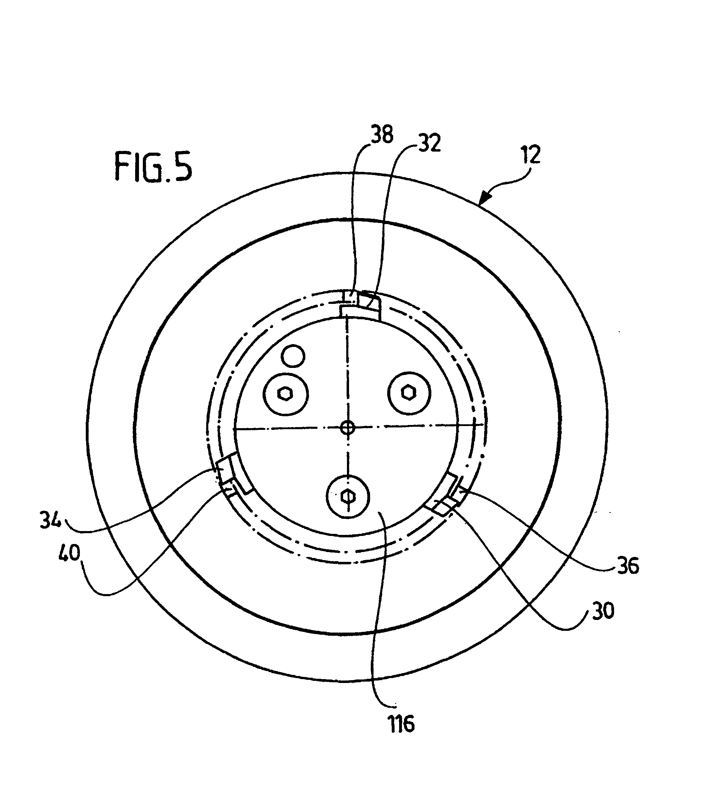

- Figur 5:: eine Vorderansicht des Werkzeughalters in Richtung des Pfeiles A in Figur 1.

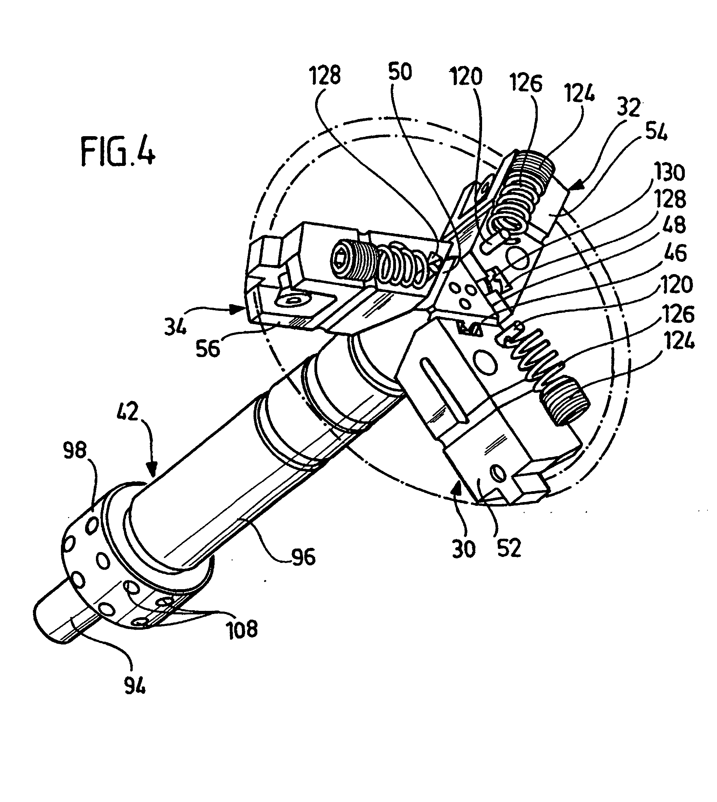

In der Zeichnung ist ein insgesamt mit dem Bezugszeichen 10 belegter Werkzeughalter dargestellt. Dieser ist für den Einsatz an einer Werkzeugmaschine bestimmt und kann hierzu in üblicher Weise mit der Maschinenspindel der Werkzeugmaschine gekoppelt werden. Der Werkzeughalter 10 umfaßt ein ortsfest mittels einer an sich bekannten und deshalb in der Zeichnung nicht dargestellten Drehmomentenstütze an der Werkzeugmaschine gehaltenes Gehäuse 12, das einen mittels Kugellager 14, 16 verdrehbar am Gehäuse 12 angeordneten, drehend von der Werkzeugmaschine angetriebenen Grundkörper 18 umgibt. Der Grundkörper 18 ist um eine Drehachse 20 rotierbar und im wesentlichen zylinderförmig ausgestaltet. Zur Kopplung mit der Maschinenspindel weist der Grundkörper 18 auf seiner der Werkzeugmaschine zugewandten Rückseite 22 eine zentrische Aufnahme 24 auf. Zur Kopplung könnte alternativ auch ein üblicher Steilkegelschaft vorgesehen sein. Auf seiner der Aufnahme 24 abgewandten Stirnseite 26 trägt der Grundkörper 18 einen lösbar mit dem Grundkörper 18 verbindbaren Werkzeugkopf 28, an dem - wie insbesondere aus Figur 4 deutlich wird - drei gleichmäßig über einen Umfang verteilt angeordnete Schneidenhalter 30, 32, 34 radial verschiebbar gehalten sind, an denen jeweils eine Schneide 36, 38 bzw. 40 festgelegt ist.

Die Betätigung der Schneidenhalter 30, 32, 34 erfolgt über eine Steuerstange 42, die in eine in die Stirnseite 26 einmündende, koaxial zur Drehachse 20 ausgerichtete Längsbohrung 58 des Grundkörpers 18 eintaucht und an ihrem freien, über die Stirnseite 26 überstehenden Ende jeweils in einem Winkel von 120° schräg zur Drehachse 20 ausgerichtete Gleitflächen 46, 48, 50 aufweist, an denen jeweils ein Schneidenhalter 30, 32 bzw. 34 mit einem Schlitten 52, 54 bzw. 56 anliegt.

Ein quer zur Drechachse 20 ausgerichtetes, den Grundkörper 18 sowie die Längsbohrung 58 durchgreifendes Langloch 60 bildet eine Führung für einen das Langloch 60 und die Steuerstange 42 durchgreifenden, beidseitig über das Langloch 60 überstehenden Bolzen 62, der sicherstellt, daß die Steuerstange 42 im Grundkörper 18 drehfest, jedoch axial, d. h. koaxial zur Drehachse 20, verschiebbar gehalten ist.

Die Axialbewegung der Steuerstange 42 wird ebenso wie deren Rotationsbewegung durch die Bewegung des Grundkörpers 18 hervorgerufen. Zur Erzielung der axialen Bewegung ist die Steuerstange 42 mit dem Bolzen 62 über eine Steuerkurve 64 und ein Planetengetriebe 66 mit dem Grundkörper 18 gekoppelt. Das Planetengetriebe 66 umfaßt zwei koaxial zur Drehachse 20 ausgerichtete, an einem radial nach außen weisenden Bund 68 des Grundkörpers 18 anliegende Zahnkränze 70, 72 sowie zwei starr miteinander verbundene, auf einer gemeinsamen Achse 74 in einer Aufnahme 76 des Gehäuses 12 gelagerte Planetenräder 78, 80, die jeweils mit einem Zahnkranz 70 bzw. 72 kämmen. Über die beiden Planetenräder 78, 80 wird die Drehbewegung des ersten, drehfest mit dem Grundkörper 18 verbundenen Zahnkranzes 70 auf den verdrehbar gehaltenen zweiten Zahnkranz 72 übertragen. Die Übersetzungsverhältnisse des Planetengetriebes 66 sind hierbei so gewählt, daß der zweite Zahnkranz 72 eine geringfügig höhere Umdrehungszahl als der erste Zahnkranz 70 und der Grundkörper 18 aufweist.

Drehfest mit dem zweiten Zahnkranz 72 verbunden ist ein Vorschubring 82, der den Grundkörper 18 umgibt und relativ zu diesem verdrehbar ist. An diesen schließt sich in axialer Richtung ein zweiter Vorschubring 84 an, der ebenfalls den Grundkörper 18 in Umfangsrichtung umgibt und eine radiale Durchgangsbohrung 86 aufweist, in die der Bolzen 62 eintaucht. Über den Bolzen 62 ist der zweite Vorschubring 84 drehfest mit der Steuerstange 42 verbunden.

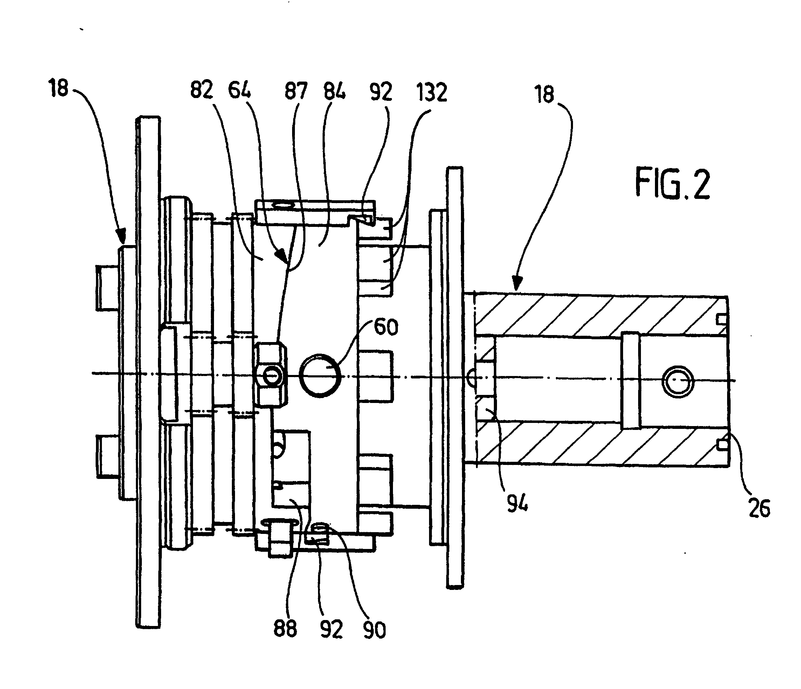

Die beiden Vorschubringe 82, 84 bilden in ihrem gegenseitigen Anlagebereich die Steuerkurve 64 aus, die, wie insbesondere aus Figur 2 deutlich wird, einen schraubenlinienförmigen Abschnitt 87 aufweist, an dem sich in Umfangsrichtung ein Rücksprung 88 anschließt. Sie ist somit schräg zur Drehachse 20 ausgerichtet. Aufgrund der gewählten Übersetzung weist der drehfest mit dem zweiten Zahnkranz 72 verbundene erste Vorschubring 82 eine geringfügig höhere Drehzahl auf als der über den Bolzen 62 drehfest mit dem Grundkörper 18 verbundene zweite Vorschubring 84. Die dadurch erzielte Relativbewegung zwischen den beiden Vorschubringen 82, 84 hat aufgrund der schrägen Ausrichtung der Steuerkurve 64 eine Axialbewegung des zweiten Vorschubringes 84 und der über den Bolzen 62 mit diesem gekoppelten Steuerstange 42 zur Folge. Durch den parallel zur Drehachse 20 ausgerichteten Rücksprung 88 wird sichergestellt, daß der zweite Vorschubring 84 und mit diesem die Steuerstange 42 nach einer anfänglichen Axialbewegung in Richtung auf die Stirnseite 26 sprungartig wieder in seine Ursprungsstellung zurückgeführt wird. Dies hat zur Folge, daß die Steuerstange 42 eine axial gerichtete Hin- und Herbewegung ausführt, wenn der Grundkörper 18 zu einer Drehbewegung angetrieben wird. Um sicherzustellen, daß der zweite Vorschubring 64 bei Erreichen des Rücksprunges 88 in Richtung auf die Rückseite 22 verschoben wird, trägt der Vorschubring 84 auf seiner Außenseite zwei radial ausgerichtete Mitnehmerzapfen, wobei in der Zeichnung nur ein Mitnehmerzapfen 90 sichtbar ist. Diese Mitnehmerzapfen 90 greifen in Umfangsrichtung dem Rücksprung 88 benachbart jeweils in eine drehfest am ersten Vorschubring 82 angeordnete Führungsaufnahme 92 ein, durch die sichergestellt wird, daß der zweite Vorschubring 84 bei seiner Verdrehung relativ zum ersten Vorschubring 82 bei Erreichen des Rücksprunges 88 abrupt seine ursprüngliche Stellung wieder einnimmt.

Die Steuerstange 42 ist dreiteilig ausgestaltet und umfaßt einen hinteren Stangenabschnitt 94, der vom Bolzen 62 durchgriffen wird, einen vorderen Stangenabschnitt 96, der über die Stirnseite 26 des Grundkörpers 18 übersteht, sowie einen die beiden Stangenabschnitte 94, 96 miteinander verbindenden Mittelabschnitt 98. Letzterer bildet einen Einstellmechanismus, mit dessen Hilfe die Länge der Steuerstange 42 eingestellt werden kann. Zu diesem Zwecke ist der Mittelabschnitt 98 zylinderförmig ausgestaltet und drehbar in der Längsbohrung 58 des Grundkörpers 18 gehalten. Auf seinen beiden Stirnseiten trägt der Mittelabschnitt 98 jeweils einen Führungsbolzen 100, 102, wobei der hintere Führungsbolzen 100 in eine korrespondierende Sackbohrung des hinteren Stangenabschnittes 94 eintaucht und mittels eines Gewindestiftes 104 und einer korrespondierenden Umfangsnut 106 drehbar, jedoch axial unverschieblich mit dem hinteren Stangenabschnitt 94 verbunden ist. Im Gegensatz hierzu trägt der in eine korrespondierende Sackbohrung des vorderen Stangenabschnittes 96 eintauchende vordere Führungsbolzen 102 ein Außengewinde, das mit einem korrespondierenden Innengewinde des vorderen Stangenabschnittes 96 korrespondiert. Wird der Mittelabschnitt 98 und mit diesem der vordere Führungsbolzen 102 relativ zum vorderen Stangenabschnitt 96 verdreht, so wird dadurch der vordere Stangenabschnitt 96 mehr oder weniger auf den Führungsbolzen 102 aufgeschraubt. Dies hat zur Folge, daß sich die Gesamtlänge der Steuerstange 42 durch Verdrehen des Mittelabschnittes 98 verändern läßt. Um die Verdrehung vornehmen zu können, weist der Mittelabschnitt 98 eine Vielzahl von quer zur Drehachse 20 ausgerichteten Durchgangsbohrungen 108 auf, und in Höhe der Durchgangsbohrungen 108 ist am Grundkörper 18 eine Öffnung 110 vorgesehen, so daß Durchgangsbohrungen 108 nach Entfernen eines die Öffnung 110 verschließenden Deckels 112 zugänglich sind und über die Öffnung 110 der Mittelabschnitt 98 mit Hilfe eines geeigneten, in eine der Durchgangsbohrungen 108 eingreifenden Werkzeuges verdreht werden kann.

Der Werkzeugkopf 28 weist eine den vorderen Endbereich der Steuerstange 42 umgebende Hülse 114 auf. Diese Hülse 114 wurde bei der Darstellung des Werkzeugkopfes 28 in Figur 4 zur Erzielung einer besseren Übersichtlichkeit weggelassen. Die Hülse 114 wird an ihrem freien Ende von einem in Figur 4 der Übersichtlichkeit halber ebenfalls weggelassenen Deckel 116 abgedeckt. Zwischen der Hülse 114 und dem Mittelabschnitt 98 der Steuerstange 42 ist eine Druckfeder 115 eingespannt, die die Steuerstange 42 mit einer Federkraft in Richtung ihrer rückwärtigen Stellung beaufschlagt. Dies hat eine Kraftbeaufschlagung des zweiten Vorschubringes 84 zur Folge.

Die Hülse 114 weist in Umfangsrichtung gleichmäßig verteilt und axial auf gleicher Höhe drei radial ausgerichtete Führungsöffnungen 118 auf, in denen die Schlitten 52, 54 bzw. 56 unverdrehbar, jedoch radial verschiebbar gehalten sind. Auf ihrer der Stirnseite 26 abgewandten Vorderseite tragen die Schlitten 52, 54, 56 jeweils einen Haltezapfen 120, der in eine parallel zu den Führungsöffnungen 118 in den Deckel 116 eingearbeitete Sackbohrung 122 eintaucht. Die Sackbohrungen 122 werden jeweils von einem Gewindestift 124 verschlossen. Letztere sind jeweils mit einem Ende einer schraubenlinienförmigen Rückholfeder 126 verbunden, deren anderes Ende jeweils an einem Haltezapfen 120 festgelegt ist.

Die Schlitten 52, 54 und 56 weisen auf ihrer der jeweiligen Gleitfläche 46, 48 bzw. 50 der Steuerstange 42 zugewandten Anlagefläche eine T-förmige Führungsnut 128 auf, in die ein senkrecht zur jeweiligen Gleitfläche 46, 48 bzw. 50 in die Steuerstange 42 eingeschraubter Zugbolzen 130 mit einem komplementär zur Führungsnut 128 ausgebildeten Bolzenkopf eintaucht.

Wird der Grundkörper 18 von der Maschinenspindel drehend angetrieben, so hat dies eine entsprechende Rotationsbewegung des Werkzeugkopfes 28 zur Folge. Gleichzeitig wird, wie voranstehend erläutert, über das Planetengetriebe 66 und die Steuerkurve 64 eine Axialbewegung der Steuerstange 42 hervorgerufen, so daß sich diese definiert in Richtung auf den Deckel 116 bewegt und hierbei die Schlitten 52, 54, 56 und die daran angeordneten Schneiden 36, 38, 40 radial nach außen verschiebt. Die Verschiebung der Schlitten 52, 54, 56 erfolgt hierbei gegen die Kraft der Rückholfeder 126. Außerdem wird über den durch den Zugbolzen 130 und die Führungsnut 128 ausgebildeten Formschluß sichergestellt, daß die Schlitten 52, 54, 56 trotz der erheblichen Zentrifugalkräfte, die auf sie einwirken, eine definierte Radialbewegung ausführen, wobei gleichzeitig alle drei Schneiden 36, 38, 40 mit dem zu bearbeitenden Werkstück in Eingriff gelangen können zur Erzielung eines Einstiches. Haben die Schlitten 52, 54, 56 eine gewünschte ausgefahrene Stellung erzielt, so erfolgt aufgrund des an den Vorschubringen 82, 84 ausgebildeten Rücksprunges 88 eine rückwärtige Bewegung der Steuerstange 42, so daß die Schlitten 52, 54, 56 wieder ihre ursprüngliche, eingefahrene Stellung einnehmen.

Um die Position der Schneidenhalter 30, 32, 34 mit den Schlitten 52, 54, 56 berührungslos erfassen und an eine maschinenseitige Steuerung übermitteln zu können, trägt der zweite Vorschubring 84 auf seiner dem ersten Vorschubring 82 abgewandten Stirnseite mehrere über seinen Umfang verteilte angeordnete Dauermagnete 132, denen in einer entsprechenden Aufnahme des Gehäuses 12 ein Hallelement 134 zugeordnet ist, mit dessen Hilfe die Position des zweiten Vorschubringes 84 erfaßbar ist. Da dieser Vorschubring 84 über den Bolzen 62 starr mit der Steuerstange 42 und letztere mit den Schlitten der Schneidenhalter 30, 32, 34 gekoppelt ist, kann somit über die Magnete 132 und das Hallelement 134 die Position der Schneidenhalter 30, 32, 34 erfaßt werden.

Das Hallelement 134 steht mit einer ebenfalls im Gehäuse 12 positionierten Elektronik 136 in elektrischer Verbindung, an die über einen Reed-Schalter 138 eine im Gehäuse 12 angeordnete Spannungsversorgung 140 angeschlossen ist. Dem Reed-Schalter 138 ist ein am zweiten Vorschubring 84 angeordneter Magnet 142 zugeordnet, mit dessen Hilfe der Reed-Schalter 138 betätigt werden kann. Mit Hilfe des Reed-Schalters 138 wird die Elektronik 136 nur im Falle einer Rotationsbewegung des Grundkörpers 18 aktiviert. Ansonsten befindet sich die Elektronik 136 in einem Stromspar-Modus um den Energieverbrauch der Elektronik 136 zu senken und die Stromversorgung des Hallelements 134 und einer Datenübertragungseinheit 144 abzuschalten.

Die Elektronik 136 umfaßt die Datenübertragungseinheit 144, mit deren Hilfe die vom Hallelement 136 erfaßten Positionsdaten drahtlos an die maschinenseitige Steuerung übertragen werden können. Dadurch läßt sich insbesondere ein Stopsignal für die Maschinenspindel generieren, so daß die Drehbewegung des Grundkörpers 18 von der Werkzeugmaschinensteuerung unterbrochen werden kann, sobald die Schneidenhalter 30, 32, 34 nach Durchlaufen ihrer ausgefahrenen Stellung wieder ihre eingefahrene Stellung erreicht haben. Der Werkzeughalter 10 kann dann mittels der Maschinenspindel ohne weiteres aus dem bearbeiteten Werkstück herausgezogen werden, ohne daß es zu einer Kollision der Schneiden 36, 38, 40 mit dem Werkstück kommt.

## Patentansprüche

1. Werkzeughalter (10) für den Einsatz in Werkzeugmaschinen umfassend einen um eine Drehachse (20) rotierenden Grundkörper (18) und mindestens zwei mittels einer axial verschiebbaren Steuerstange (42) und Kopplungsmittel radial zwischen einer eingefahrenen und einer ausgefahrenen Stellung verstellbare, jeweils eine Schneidplatte haltende Schneidenhalter (30, 32, 34), **dadurch gekennzeichnet, daß** die mindestens zwei Schneidenhalter (30, 32, 34) über einen gemeinsamen Kreisumfang verteilt angeordnet sind und deren Schneiden (36, 38, 40) zur Erzeugung eines Einstiches gleichzeitig mit einem Werkstück in Eingriff bringbar sind, und daß der Werkzeughalter (10) Getriebemittel (64, 66) umfaßt zur Umwandlung einer Rotationsbewegung des Grundkörpers (18) in eine axial ausgerichtete Hin- und Herbewegung der Steuerstange (42), wobei die Getriebemittel zwei relativ zueinander verdrehbare, über eine schräg zur Axialrichtung ausgerichtete Steuerkurve (64) aneinander anliegende Kurvenelemente (82, 84) umfassen.

2. Werkzeughalter nach Anspruch 1, **dadurch gekennzeichnet, daß** der Werkzeughalter (10) drei über einen Kreisumfang verteilt angeordnete Schneidenhalter (30, 32, 34) umfaßt.

3. Werkzeughalter nach Anspruch 1 oder 2, **dadurch gekennzeichnet, daß** der Axialhub der Steuerstange (42) einstellbar ist.

4. Werkzeughalter nach einem der voranstehenden Ansprüche 5, **dadurch gekennzeichnet, daß** ein erstes Kurvenelement (82) über ein Zahnradgetriebe (66) mit dem Grundkörper (18) gekoppelt ist.

5. Werkzeughalter nach einem der voranstehenden Ansprüche, **dadurch gekennzeichnet, daß** das zweite Kurvenelement (84) starr mit der Steuerstange (42) verbunden ist, wobei die Steuerstange (42) axial verschiebbar jedoch unverdrehbar am Grundkörper (18) gehalten ist.

6. Werkzeughalter nach einem der voranstehenden Ansprüche, **dadurch gekennzeichnet, daß** eines der beiden Kurvenelemente (84) in Richtung auf das andere Kurvenelement (82) federbelastet ist.

7. Werkzeughalter nach einem der voranstehenden Ansprüche, **dadurch gekennzeichnet, daß** die Schneidenhalter (30, 32, 34) in radial ausgerichteten Führungen (118) verschiebbar gehalten sind und jeweils an einer schräg zur Drehachse (20) ausgerichteten Gleitfläche (46, 48, 50) der Steuerstange (42) anliegen.

8. Werkzeughalter nach einem der voranstehenden Ansprüche, **dadurch gekennzeichnet, daß** die Schneidenhalter (30, 32, 34) ein Rückholelement (126) umfassen zum zwangsweisen Rückholen der Schneidenhalter (30, 32, 34) aus ihrer ausgefahrenen Stellung in ihre eingefahrene Stellung.

9. Werkzeughalter nach Anspruch 8, **dadurch gekennzeichnet, daß** die Schneidenhalter (30, 32, 34) einen zwischen der eingefahrenen und der ausgefahrenen Stellung verschiebbaren Schlitten (52, 54, 56) umfassen, an dem die Schneide (36, 38, 40) gehalten ist, sowie eine den Schlitten (52, 54, 56) in Richtung auf seine eingefahrene Stellung belastende Rückholfeder (126).

10. Werkzeughalter nach einem der voranstehenden Ansprüche, **dadurch gekennzeichnet, daß** die Schneidenhalter (30, 32, 34) verschiebbar und formschlüssig verbindbar in der Steuerstange (42) gehalten sind.

11. Werkzeughalter nach Anspruch 10, **dadurch gekennzeichnet, daß** zur formschlüssigen Verbindung jeweils eine Führungsnut (128) vorgesehen ist, in die ein komplementär ausgestalteter Zugbolzen (130) eingreift.

12. Werkzeughalter nach einem der voranstehenden Ansprüche, **dadurch gekennzeichnet, daß** der Werkzeughalter (10) einen Einstellmechanismus (98, 100, 102) zum Einstellen der Position der Schneidenhalter (30, 32, 34) in ihrer eingefahrenen Stellung umfaßt.

13. Werkzeughalter nach einem der voranstehenden Ansprüche, **dadurch gekennzeichnet, daß** die Länge der Steuerstange (42) veränderbar ist.

14. Werkzeughalter nach Anspruch 13, **dadurch gekennzeichnet, daß** die Steuerstange (42) einen vorderen und einen hinteren Stangenabschnitt (96 bzw. 94) aufweist, die über ein Verstellelement (98) in ihrem axialen Abstand verstellbar miteinander verbindbar sind.

15. Werkzeughalter nach einem der voranstehenden Ansprüche, **dadurch gekennzeichnet, daß** der Werkzeughalter (10) eine Sensoreinheit (134, 132) umfaßt zur Erfassung der eingefahrenen Stellung der Schneidenhalter.

16. Werkzeughalter nach Anspruch 15, **dadurch gekennzeichnet, daß** die eingefahrene Stellung berührungslos erfaßbar ist.

17. Werkzeughalter nach Anspruch 15 oder 16, **dadurch gekennzeichnet, daß** die Sensoreinheit ein Hallelement (134) sowie zumindest einen korrespondierenden Magneten (132) aufweist.

18. Werkzeughalter nach Anspruch 15, 16 oder 17, **dadurch gekennzeichnet, daß** der Werkzeughalter (10) eine elektrische Spannungsversorgung (140) für die Sensoreinheit (132, 134) aufweist.

19. Werkzeughalter nach Anspruch 18, **dadurch gekennzeichnet, daß** der Sensoreinheit (134) eine Elektronik (136) zugeordnet ist, die in Abhängigkeit von der Rotationsbewegung des Grundkörpers (18) selbsttätig ein- und ausschaltbar ist.

20. Werkzeughalter nach Anspruch 19, **dadurch gekennzeichnet, daß** der Werkzeughalter (10) einen Reed-Schalter (138) und einen zugeordneten Magneten (142) umfaßt.

21. Werkzeughalter nach einem der Ansprüche 15 bis 20, **dadurch gekennzeichnet, daß** der Sensoreinheit (134) eine Datenübetragungseinheit (144) zugeordnet ist zur drahtlosen Übertragung der ermittelten Positionsdaten an eine Werkzeugmaschinensteuerung.

22. Werkzeughalter nach einem der voranstehenden Ansprüche, **dadurch gekennzeichnet, daß** der Werkzeughalter (10) einen mit dem Grundkörper (18) lösbar verbindbaren Werkzeugkopf (28) umfaßt, an dem die Schneidenhalter (30, 32, 34) angeordnet sind, sowie ein den Grundkörper (18) umgebendes ortsfestes Gehäuse (12).

23. Werkzeughalter nach Anspruch 22, **dadurch gekennzeichnet, daß** das Gehäuse (12) die Sensoreinheit (134) sowie die Elektronik (136) und die Spannungsversorgung (140) aufnimmt.

## Claims

1. Tool holder (10) for use in machine tools, comprising a main body (18), which rotates about an axis of rotation (20), and at least two cutter holders (30, 32, 34) which each hold a cutting plate and can be radially adjusted by means of an axially displaceable control rod (42) and coupling means between a retracted position and an extended position, **characterised in that** the at least two cutter holders (30, 32, 34) are arranged in a manner distributed over a common circumference of a circle and their cutters (36, 38, 40) can be simultaneously brought into engagement with a workpiece in order to produce a turned groove, and **in that** the tool holder (10) comprises gear means (64, 66) for converting a rotation movement of the main body (18) into an axially oriented reciprocating movement of the control rod (42), the gear means comprising two cam elements (82, 84) which can rotate relative to one another and bear on one another via a control cam (64) which is oriented obliquely with respect to the axial direction.

2. Tool holder according to Claim 1, **characterised in that** the tool holder (10) comprises three cutter holders (30, 32, 34) arranged in a manner distributed over a circumference of a circle.

3. Tool holder according to Claim 1 or 2, **characterised in that** the axial stroke of the control rod (42) is adjustable.

4. Tool holder according to one of the preceding claims, **characterised in that** a first cam element (82) is coupled to the main body (18) via a toothed gearing (66).

5. Tool holder according to one of the preceding claims, **characterised in that** the second cam element (84) is connected rigidly to the control rod (42), the control rod (42) being mounted on the main body (18) in such a way as to be axially displaceable but not rotatable.

6. Tool holder according to one of the preceding claims, **characterised in that** one of the two cam elements (84) is spring-loaded in the direction of the other cam element (82).

7. Tool holder according to one of the preceding claims, **characterised in that** the cutter holders (30, 32, 34) are mounted displaceably in radially oriented guides (118) and each bear on a slide surface (46, 48, 50), of the control rod (42), oriented obliquely with respect to the axis of rotation (20).

8. Tool holder according to one of the preceding claims, **characterised in that** the cutter holders (30, 32, 34) comprise a return element (126) for forced return of the cutter holders (30, 32, 34) from their extended position to their retracted position.

9. Tool holder according to Claim 8, **characterised in that** the cutter holders (30, 32, 34) comprise a carriage (52, 54, 56) which is displaceable between the retracted position and the extended position and on which the cutter (36, 38, 40) is mounted, and a return spring (126) loading the carriage (52, 54, 56) in the direction of its retracted position.

10. Tool holder according to one of the preceding claims, **characterised in that** the cutter holders (30, 32, 34) are mounted displaceably and in a positively connectable manner in the control rod (42).

11. Tool holder according to Claim 10, **characterised in that**, for the positive connection, a guide slot (128) is in each case provided into which there engages a tension bolt (130) of complementary configuration.

12. Tool holder according to one of the preceding claims, **characterised in that** the tool holder (10) comprises an adjustment mechanism (98, 100, 102) for adjusting the setting of the cutter holders (30, 32, 34) in their retracted position.

13. Tool holder according to one of the preceding claims, **characterised in that** the length of the control rod (42) can be altered.

14. Tool holder according to Claim 13, **characterised in that** the control rod (42) has a front rod portion and a rear rod portion (96 and 94, respectively) which can be connected to one another with adjustable axial spacing via an adjustment element (98).

15. Tool holder according to one of the preceding claims, **characterised in that** the tool holder (10) comprises a sensor unit (134, 132) for detecting the retracted position of the cutter holders.

16. Tool holder according to Claim 15; **characterised in that** the retracted position can be detected in a contactless manner.

17. Tool holder according to Claim 15 or 16, **characterised in that** the sensor unit has a Hall element (134) and at least one corresponding magnet (132).

18. Tool holder according to Claim 15, 16 or 17, **characterised in that** the tool holder (10) has an electric power supply (140) for the sensor unit (132, 134).

19. Tool holder according to Claim 18, **characterised in that** the sensor unit (134) is associated with an electronics unit (136) which can switch on and off automatically as a function of the rotation movement of the main body (18).

20. Tool holder according to Claim 19, **characterised in that** the tool holder (10) comprises a reed switch (138) and an associated magnet (142).

21. Tool holder according to one of Claims 15 to 20, **characterised in that** the sensor unit (134) is associated with a data transmission unit (144) for wireless transmission of the determined position data to a machine-tool control.

22. Tool holder according to one of the preceding claims, **characterised in that** the tool holder (10) comprises a tool head (28) which can be connected releasably to the main body (18) and on which the cutter holders (30, 32, 34) are arranged, and a stationary housing (12) enclosing the main body (18).

23. Tool holder according to Claim 22, **characterised in that** the housing (12) accommodates the sensor unit (134), the electronics unit (136) and the power supply (140).

## Revendications

1. Porte-outil (10) destiné être utilisé dans des machines-outils et comportant un corps de base (18) tournant autour d'un axe de rotation (20) et au moins deux porte-couteau (30, 32, 34) déplaçables radialement entre une position rentrée et une position sortie au moyen d'une barre de commande (42) mobile axialement et de moyens de couplage, et portant chacun une plaquette de coupe, **caractérisé en ce que** les au moins deux porte-couteau (30, 32, 34) sont répartis sur une périphérie circulaire commune et leurs plaquettes de coupe (36, 38, 40) peuvent être amenées simultanément en engagement avec une pièce à usiner en vue de générer une entaille, et **en ce que** le porte-outil (10) comporte des moyens de transmission (64, 66) en vue de transformer un mouvement de rotation du corps de base (18) en un mouvement alternatif, dirigé axialement, de la barre de commande (42), les moyens de transmission comportant deux éléments formant came (82, 84), mobiles l'un par rapport à l'autre et portant l'un sur l'autre via une came de commande (64) inclinée par rapport à la direction axiale.

2. Porte-outil selon la revendication 1, **caractérisé en ce que** le porte-outil (10) comporte trois porte-couteau (30, 32, 34) répartis sur une périphérie circulaire.

3. Porte-outil selon la revendication 1 ou 2, **caractérisé en ce que** la course axiale de la barre de commande (42) est réglable.

4. Porte-outil selon l'une des revendications précédentes, **caractérisé en ce qu'**un premier élément formant came (82) est couplé au corps de base (18) via une transmission à roues dentées (66).

5. Porte-outil selon l'une des revendications précédentes, **caractérisé en ce que** le deuxième élément formant came (84) est relié rigidement à la barre de commande (42), la barre de commande (42) étant maintenue sur le corps de base (18) de façon à pouvoir se déplacer axialement tout en étant immobile en rotation.

6. Porte-outil selon l'une des revendications précédentes, **caractérisé en ce que** l'un des deux éléments formant came (84) est contraint élastiquement en direction de l'autre élément formant came (82).

7. Porte-outil selon l'une des revendications précédentes, **caractérisé en ce que** les porte-couteau (30, 32, 34) sont maintenus de façon à pouvoir se déplacer dans des guides (118) dirigés radialement et portent chacun sur une surface de glissement (46, 48, 50) de la barre de commande (42), laquelle surface de glissement est inclinée par rapport à l'axe de rotation (20).

8. Porte-outil selon l'une des revendications précédentes, **caractérisé en ce que** les porte-couteau (30, 32, 34) comportent un élément de rappel (126) destiné à ramener de façon forcée les porte-couteau (30,32,34) de leur position sortie dans leur position rentrée.

9. Porte-outil selon la revendication 8, **caractérisé en ce que** les porte-couteau (30, 32, 34) comportent un chariot (52, 54, 56), qui est déplaçable entre la position rentrée et la position sortie et sur lequel la plaquette de coupe (36, 38, 40) est maintenue, ainsi qu'un ressort de rappel (126) contraignant le chariot (52, 54, 56) dans la direction de sa position rentrée.

10. Porte-outil selon l'une des revendications précédentes, **caractérisé en ce que** les porte-couteau (30, 32, 34) sont maintenus dans la barre de commande (42) de façon déplaçable et de façon à pouvoir être reliée par verrouillage de forme.

11. Porte-outil selon la revendication 10, **caractérisé en ce qu'**il est prévu à chaque fois une gorge de guidage (128) qui est destinée à réaliser la liaison par verrouillage de forme, et dans laquelle s'engage un boulon d'assemblage (130) de forme complémentaire.

12. Porte-outil selon l'une des revendications précédentes, **caractérisé en ce que** le porte-outil (10) comporte un mécanisme de réglage (98, 100, 102) destiné à régler la position du porte-couteau (30, 32, 34) dans sa position rentrée.

13. Porte-outil selon l'une des revendications précédentes, **caractérisé en ce que** la longueur de la barre de commande (42) est modifiable.

14. Porte-outil selon la revendication 13, **caractérisé en ce que** la barre de commande (42) comporte une section de barre avant et une section de barre arrière (96 resp. 94) qui peuvent être reliées l'une à l'autre par un élément de réglage (98) de façon à pouvoir régler leur écartement axial.

15. Porte-outil selon l'une des revendications précédentes, **caractérisé en ce que** le porte-outil (10) comporte une unité de capteur (134, 132) destinée à détecter la position rentrée du porte-couteau.

16. Porte-outil selon la revendication 15, **caractérisé en ce que** la position rentrée peut être détectée sans contact.

17. Porte-outil selon la revendication 15 ou 16, **caractérisé en ce que** l'unité de capteur comporte un élément à effet Hall (134) ainsi qu'au moins un aimant correspondant (132).

18. Porte-outil selon la revendication 15, 16 ou 17, **caractérisé en ce que** le porte-outil (10) comporte une alimentation en tension électrique (140) destinée à l'unité de capteur (132, 134).

19. Porte-outil selon la revendication 18, **caractérisé en ce que** l'unité de capteur (134) est associé à une électronique (136) qui peut être connectée et déconnectée automatiquement en fonction du mouvement de rotation du corps de base (18).

20. Porte-outil selon la revendication 19, **caractérisé en ce que** le porte-outil (10) comporte un commutateur de Reed (138) et un aimant associé (142).

21. Porte-outil selon l'une des revendications 15 à 20, **caractérisé en ce que** l'unité de capteur (134) est associée à une unité de transmission de données (144) en vue de transférer sans fil les données de position détectées à une commande de machine-outil.

22. Porte-outil selon l'une des revendications précédentes, **caractérisé en ce que** le porte-outil (10) comporte une tête d'outil (28), qui peut être reliée de façon amovible au corps de base (18) et sur laquelle sont agencés les porte-couteau(30, 32, 34), ainsi qu'un boîtier immobile (12) entourant le corps de base (18).

23. Porte-outil selon la revendication 22, **caractérisé en ce que** le boîtier (12) loge l'unité de capteur (134) ainsi que l'électronique (136) et l'alimentation en tension (140).
